# EUROPEAN PATENT APPLICATION

(11) **EP 4 641 746 A1**
(43) Date of publication of application: **29.10.2025**
(21) Application number: 24845963.8
(22) Date of filing: 19.07.2024
(51) Int. Cl.: H01M 10/0587, H01M 4/75, H01M 4/13, H01M 50/463, H01M 50/477, H01M 50/116, H01M 50/124, H01M 50/531, H01M 50/586, H01M 50/186

(54) **LOW-RESISTANCE CABLE-TYPE CELL WITHOUT ELECTRODE TAB**

(30) Priority: 21.07.2023 KR 20230095051
(71) Applicant: LG ENERGY SOLUTION, LTD., Seoul 07335 (KR)
(72) Inventor: AHN, Byung Sun, Daejeon 34122 (KR); KIM, Ji Hyun, Daejeon 34122 (KR)
(74) Representative: Hoffmann Eitle
(86) International application number: PCT/KR2024/010514
(87) International publication number: WO 2025/023661

(57) **Abstract**

When a cable-type cell in which electrode tabs are formed at both ends thereof is manufactured, the travel distance of electrons from electrodes to the electrode tabs increases as the length of the cell increases due to the linear structure of the cable-type cell, resulting in a problem of a low electron transfer rate due to an increase in cell resistance. Disclosed is a low-resistance cable-type cell without electrode tabs configured such that an embedded member constituting the outermost side of the cable-type cell serves as an electrode tab without the need to form an electrode tab of an outer electrode by configuring the embedded member as a conductive layer in order to solve the above problem. The shortest path for electrons to pass from an active material layer of the electrode to the electrode tabs is provided, whereby low-resistance properties are achieved.

## Description

### [Technical Field]

This application claims the benefit of priority to Korean Patent Application No. 2023-0095051 filed on July 21, 2023, the disclosure of which is incorporated herein by reference in its entirety.

The present invention relates to a low-resistance cable-type cell without electrode tabs. Specifically, due to the linear structure characteristics of a cable-type cell having electrode tabs formed at both ends thereof, the travel distance of electrons from electrodes to the electrode tabs increases as the length of the cell increases, resulting in an increase in cell resistance and a low electron transfer rate. The present invention relates to a low-resistance cable-type cell without electrode tabs configured such that an embedded member constituting the outermost side of the cable-type cell serves as an electrode tab without the need to separately form an electrode tab of an outer electrode by configuring the embedded member as a conductive layer in order to solve the above problem.

### [Background Art]

With rapid improvement in safety and capacity of a lithium secondary battery, which is capable of being charged and discharged, the types of devices that use the lithium secondary battery as an energy source have increased in number.

For example, the lithium secondary battery has been widely used as an energy source for wireless mobile devices, which are small multifunctional products, or wearable devices, which are worn on bodies, and has also been used as an energy source for electric vehicles and hybrid electric vehicles presented as alternatives to existing gasoline and diesel vehicles, which cause air pollution, or as a medium or large battery pack configured to be used in an energy storage system (ESS).

Depending on the shape of a battery case, the lithium secondary battery is classified as a cylindrical battery cell having an electrode assembly mounted in a cylindrical metal can, a prismatic battery cell having an electrode assembly mounted in a prismatic metal can, or a pouch battery cell having an electrode assembly mounted in a pouch case made of an aluminum laminate sheet. Thereamong, the pouch battery cell has the advantages of relatively large capacity and easy structural modification.

Various wearable computer technologies and applications using these secondary batteries as a power source are being developed and published, and electronic devices such as mobile phones and laptop computers are being designed so as to have a predetermined curved surface for ergonomic design. Accordingly, secondary batteries for operating these electronic devices also need to be formed so as to have various shapes, such as a predetermined curved surface, depending on the shape of the electronic devices.

In order to match the capacity and voltage to meet the specifications of these types of devices, a plurality of pouch cells may be connected to each other in parallel or series to constitute a pack. However, there is a problem that the thickness and volume of each of the pouch cells increase accordingly, which reduces the flexibility of the cells and directly applies mechanical stress to cell components in case of mechanical deformation, resulting in performance degradation due to damage to the pouch cells.

In response thereto, the concept of a linear cell, which is a cell having a very large ratio of the length to the sectional diameter, has been proposed.

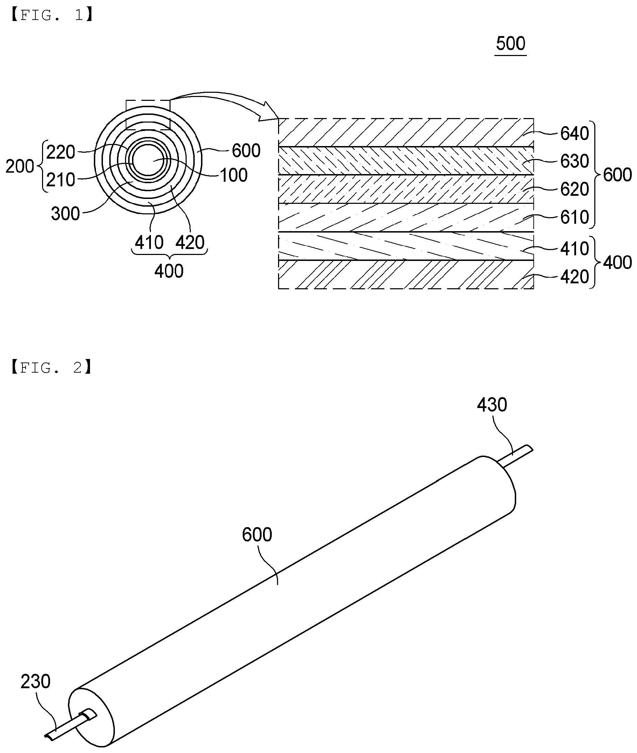

FIG. 1 is a sectional view of a conventional cable-type cell.

Referring to FIG. 1, the cable-type cell may include an inner electrode support 100 and an inner electrode 200 including a first inner current collector 210 and a first inner active material layer 220 sequentially wound around the inner electrode support 100.

An outer separation layer 300 may be formed outside the inner electrode 200.

An outer electrode 400 including an outer active material layer 420 and an outer current collector 410 may be formed outside the outer separation layer 300.

An embedded member 600 including a first embedded member layer 610, a second embedded member layer 620, a third embedded member layer 630, and a fourth embedded member layer 640 may be formed outside the outer electrode 400.

The first embedded member layer 610 may be an adhesive layer for adhesion between the outer current collector 410 and the embedded member 600.

The second embedded member layer 620 may be a metal layer for blocking moisture and/or oxygen.

The third embedded member layer 630 and/or the fourth embedded member layer 640 may be an insulating layer for insulation.

The adhesive layer may be made of any one of polypropylene, polycarbonate, polyethylene, styrene butadiene rubber, sodium carboxymethyl cellulose, polyvinylidene fluoride, a polyvinylidene fluoride copolymer, polytetrafluoroethylene, polystyrene, polyacrylonitrile, polyimide, polyacrylic acid, sodium polyacrylate, polyvinyl alcohol, sodium alginate, poly(methacrylic acid), and carboxymethyl chitosan or two or more thereof.

In the present invention, the embedded member is provided, wherein the embedded member is an insulator formed on an outer surface of the outer current collector to protect the electrode against moisture in the air and external impact. A conventional polymer resin including a moisture barrier layer may be used as the embedded member. In this case, aluminum or a liquid crystal polymer having excellent moisture barrier performance may be used as the moisture barrier layer.

The polymer resin may include any one selected from the group consisting of polyethylene terephthalate (PET), polyvinyl chloride (PVC), high density polyethylene (HDPE), and an epoxy resin or two or more thereof.

FIG. 2 is a perspective view of bidirectional electrode tabs of the conventional cable-type cell.

Referring to FIG. 2, electrode tabs may be formed at both ends of the conventional cable-type cell so as to be connected to external terminals.

The electrode tab protruding from the lower end of FIG. 2 may be an inner electrode tab 230 of the inner electrode.

The electrode tab protruding from the upper end of FIG. 2 may be an outer electrode tab 430 of the outer electrode.

The inner electrode tab 230 may extend from the inner current collector. The outer electrode tab 430 may extend from the outer current collector. Thus, a unidirectional cable-type cell may be formed in which the inner electrode tab and the outer electrode tab protrude from one end of the cable-type cell.

A bidirectional cable-type cell may be formed in which the inner electrode tab 230 and/or the outer electrode tab 430 are formed at both ends of the cable-type cell.

A bidirectional cable-type cell may be formed in which the inner electrode tab 230 and/or the outer electrode tab 430 are formed at both ends of the cable-type cell.

The embedded member is configured in the form of a sheet including an aluminum laminate layer, and the embedded member has a structure that wraps around the entirety of the inner electrode 200, an outer separation layer 300, and the outer electrode 400 sequentially wound around the inner electrode support.

Thus, the electrode tabs of the inner electrode 200 and the outer electrode 400 are formed in the form of strips, which are respectively welded to the current collectors of the inner electrode 200 and the outer electrode 400 so as to protrude from both ends of the cable-type cell.

Due to the linear structure characteristics of the cable-type cell, electrode tabs of the electrodes can only be formed at both ends of the cell, and as the travel distance of electrons from the electrodes to the electrode tabs increases as the length of the cell increases, there is a problem that the rate characteristics related to electron mobility are degraded due to an increase in cell resistance.

Furthermore, in the case of a unidirectional cable-type cell, since the inner electrode tab and the outer electrode tab are formed adjacent to each other, there is a problem of short circuit due to contact between the two electrode tabs.

Therefore, a shortest distance path for electrons to pass from the active material layer of the electrode to the electrode tab is provided using a tabless structure in which an electrically conductive material serving as a positive electrode tab is applied to the outermost package of the cable-type cell, and the resistance of the cable-type cell is minimized regardless of the length of the linear cell, thereby balancing the length of the cell and the deterioration of the electron transfer characteristics.

Korean Registered Patent Publication No. 2259381 discloses a flexible secondary battery including an electrode support, a sheet type inner electrode spirally wound outside the electrode support, a sheet type first solid electrolyte layer spirally wound outside the inner electrode, a sheet type bipolar electrode spirally wound outside the first solid electrolyte layer, a sheet type second solid electrolyte layer spirally wound outside the bipolar electrode, and a sheet type outer electrode spirally wound outside the second solid electrolyte layer, wherein each of the first solid electrolyte layer and the second solid electrolyte layer includes an organic solid electrolyte, the inner electrode and the outer electrode have insulating coatings provided at both ends of side surfaces facing the first solid electrolyte layer and the second solid electrolyte layer in a longitudinal direction, and the bipolar electrode has insulating coatings provided at both ends of both side surfaces in the longitudinal direction.

However, cable-type cell technology in which an embedded member exposes the outer electrode in order to use the outermost side of a cable-type cell of the present invention as an electrode tab of an outer electrode has not yet been applied.

Korean Registered Patent Publication No. 2128094 discloses a cable-type secondary battery including a cable-type electrode assembly including an inner electrode, a separation layer formed so as to surround an outer surface of the inner electrode, the separation layer being configured to prevent short circuit of the electrode, and an outer electrode formed so as to surround the separation layer, and a sheet type package spirally wound so as to surround an outer surface of the cable-type electrode assembly.

However, technology for a cable-type cell having an embedded member exposing an outer electrode of the present invention is not disclosed.

Japanese Patent Application Publication No. 2016-066520 discloses a power storage apparatus having a structure in which a power storage sheet including a positive electrode/separator/negative electrode is spirally wound around a wire structure, in which a gap is formed between the wound parts of the power storage sheet, and in which an exposed part is formed on a positive and/or negative electrode sheet of the power storage sheet and is exposed to the outside of the power storage sheet so as to be used as a terminal.

However, there is no disclosure of technology for a cable-type cell having an embedded member exposing an outer electrode of the present invention.

Japanese Patent Application Publication No. 2021-026957 discloses a negative electrode having a fiber bundle of carbon fibers and a metal wire inserted into the fiber bundle in a longitudinal direction of the fiber bundle and a pin-type secondary battery including the same.

However, technology for a cable-type cell having an embedded member wound while being partially spaced apart from each other in order to apply the outermost side of the cable-type cell of the present invention as an electrode tab of an outer electrode has not yet been applied.

Therefore, when a cable-type cell in which electrode tabs are formed at both ends thereof is manufactured, the travel distance of electrons from electrodes to the electrode tabs increases as the length of the cell increases due to the linear structure characteristics of the cable-type cell, resulting in a problem of a low electron transfer rate due to an increase in cell resistance, and therefore it is necessary to develop a low-resistance cable-type cell without electrode tabs configured such that an embedded member constituting the outermost side of the cable-type cell serves as an electrode tab without the need to form an electrode tab of an outer electrode by removing a non-conductive material from the embedded member and forming a conductive layer at the outermost side of the cable-type cell in order to solve the above problem.

### [Disclosure]

### [Technical Problem]

The present invention has been made in view of the above problems. When a cable-type cell in which electrode tabs are formed at both ends thereof is manufactured, the travel distance of electrons from electrodes to the electrode tabs increases as the length of the cell increases due to the linear structure characteristics of the cable-type cell, resulting in a problem of a low electron transfer rate due to an increase in cell resistance, and therefore it is an object of the present invention to provide a low-resistance cable-type cell without electrode tabs configured such that an embedded member constituting the outermost side of the cable-type cell serves as an electrode tab without the need to form an electrode tab of an outer electrode by removing a non-conductive material from the embedded member and forming a conductive layer at the outermost side of the cable-type cell in order to solve the above problem.

In addition, it is another object of the present invention to provide a cable-type type tabless structure in which a pouch-type embedded member, which is the outermost package of a cable-type cell, is conductive and thus serves as an electrode tab of an outer electrode, thereby providing a shortest distance path for electrons to move from an active material layer of the electrode to the electrode tab.

In addition, it is a further object of the present invention to provide a cable-type cell including a cable-type type tabless structure in which the length of the cell can be increased without restriction in order to solve the problem that the electron movement characteristics of a conventional cable-type cell deteriorate as the length of the cable-type cell increases.

### [Technical Solution]

A low-resistance cable-type cell without electrode tabs according to the present invention to accomplish the above objects includes a cable-type electrode assembly including an inner electrode support and one or more inner electrodes, an outer separation layer, and an outer electrode spirally wound around the inner electrode support in sequence and an embedded member configured to receive the cable-type electrode assembly, wherein the embedded member is made of a conductive material.

The embedded member may be formed as a single layer or as two or more laminated conductive layers.

The embedded member may be in contact with the outer electrode.

The embedded member may be configured to be an electrode tab of the outer electrode.

The one or more inner electrodes may include a first inner electrode, the first inner electrode may include a first inner current collector and a first inner active material layer formed on one surface of the first inner current collector, and the first inner electrode, the outer separation layer, and the outer electrode may constitute a monocell.

The outer electrode may include an outer current collector and an outer active material layer formed on one surface of the outer current collector, and the first inner electrode, the outer separation layer, and the outer electrode may constitute a monocell.

The one or more inner electrodes may include an inner separation layer spirally wound outside the first inner electrode and a second inner electrode spirally wound outside the inner separation layer, and the first inner electrode, the inner separation layer, the second inner electrode, the outer separation layer, and the outer electrode may constitute a bi-cell.

The second inner electrode may include a second inner current collector and a 2-1 inner active material layer and a 2-2 inner active material layer formed respectively on opposite surfaces of the second inner current collector.

The first inner electrode and the outer electrode may be the same, and the second inner electrode may be different from the first inner electrode and the outer electrode.

If the first inner electrode and the outer electrode are positive electrodes, the second inner electrode may be a negative electrode, and if the first inner electrode and the outer electrode are negative electrodes, the second inner electrode may be a positive electrode.

Each of the inner separation layer and the outer separation layer may be an electrolyte layer or a separator.

The embedded member may wrap around opposite end surfaces of the cable-type cell.

If the cable-type cell is a monocell, the embedded member may be added so as to wrap around a part of the outer separation layer and the outer electrode exposed from opposite ends of the cable-type electrode assembly.

If the cable-type cell is the monocell, a non-conductive inner electrode sealant layer may be formed from a part of the outer separation layer where the embedded member is not formed to the first inner active material layer.

On at least one of the opposite ends of the cable-type electrode assembly, an inner electrode tab may be formed in a part of the first inner current collector where the embedded member and the sealant layer are not formed.

An inner electrode tab sealant layer may be formed at the connection between the inner electrode tab and the first inner current collector.

If the cable-type cell is a bi-cell, the embedded member may be added so as to wrap around the outer electrode, the one or more inner electrodes, a part of the outer separation layer, and a part of the inner separation layer exposed from opposite ends of the cable-type electrode assembly.

If the cable-type cell is the bi-cell, a non-conductive inner electrode sealant layer may be formed from a part of the outer separation layer to which the embedded member is not added to the 2-1 inner active material layer, and a non-conductive sealant layer may be formed from a part of the inner separation layer to which the embedded member is not added to the 2-2 inner active material layer.

On at least one of the opposite ends of the cable-type electrode assembly, an inner electrode tab may extend to a part of the second inner current collector where the embedded member and the inner electrode sealant layer are not formed.

The inner electrode sealant layer may include any one selected from a group consisting of polypropylene, a polypropylene-acrylic acid copolymer, a polyethylene-acrylic acid copolymer, polypropylene chloride, a polypropylene-butylene-ethylene terpolymer, polyethylene, polyethylene, and an ethylene-propylene copolymer or two or more thereof.

The sectional shape of the cable-type cell may be any one of a circular shape, an oval shape, a triangular shape, a quadrangular shape, a square shape, a rectangular shape, a polygonal shape, and an amorphous shape.

The embedded member may be encapsulated to receive the cable-type electrode assembly.

A sheathing member may be formed on an outer surface of the embedded member, the sheathing member being configured to expose only a part of the embedded member.

The sheathing member may wrap around the embedded member formed at opposite ends of the cable-type cell.

The sheathing member may wrap around opposite ends of the cable-type cell except for the inner electrode tab.

A low-resistance cable-type cell without electrode tabs according to the present invention to accomplish the above objects includes a cable-type electrode assembly including two or more inner electrodes and an outer separation layer and an outer electrode formed so as to surround outer surfaces of the two or more inner electrodes, the outer separation layer and the outer electrode being spirally wound in sequence, and an embedded member configured to receive the cable-type electrode assembly, wherein the embedded member is conductive.

The two or more inner electrodes may be configured such that two or more wire-shaped inner electrodes are disposed in parallel in contact with each other, or such that two or more wire-shaped inner electrodes are disposed in a twisted state.

In addition, the present invention may provide various combinations of the above solving means.

### [Advantageous Effects]

As is apparent from the above description, in a low-resistance cable-type cell without electrode tabs according to the present invention, a shortest distance path for electrons to pass from an active material layer of an electrode to an electrode tab is provided, whereby it is possible to achieve low resistance characteristics.

In addition, the resistance of the cell is minimized regardless of the length of the cable-type cell, whereby it is possible to minimize the degradation of electron transfer characteristics even though the length of the cell increases.

In addition, the length of the cable-type cell may be increased without limiting the performance of the cable-type cell in response to various length changes required by the shape of electronic devices, making it possible to customize the cell to fit the shape of various electronic devices.

### [Description of Drawings]

FIG. 1 is a sectional view of a conventional cable-type cell.
FIG. 2 is a perspective view of bidirectional electrode tabs of the conventional cable-type cell.
FIG. 3 is a schematic view of a cable-type cell having an embedded member that is a conductive metal sheet according to an embodiment of the present invention.
FIG. 4 is a schematic view of an electrode tab of a cable-type cell having an embedded member that is a conductive metal sheet that serves as an electrode tab of an outer electrode according to an embodiment of the present invention.
FIG. 5 is an end sectional view of a cable-type monocell having an embedded member that is a conductive metal sheet according to an embodiment of the present invention.
FIG. 6 is an end perspective view of the cable-type monocell having the embedded member that is the conductive metal sheet according to the embodiment of the present invention.
FIG. 7 is a B-B sectional view of the cable-type monocell having the embedded member that is the conductive metal sheet according to the embodiment of the present invention.
FIG. 8 is a C-C sectional view of a cable-type bi-cell having an embedded member that is a conductive metal sheet according to an embodiment of the present invention.
FIG. 9 is a schematic view of a cable-type cell including a plurality of inner electrodes having an embedded member that is a conductive metal sheet that serves as an electrode tab of an outer electrode according to an embodiment of the present invention.
FIG. 10 is a graph showing the resistance between an outer electrode and an outer electrode tab based on the length in a conventional cable-type cell and a cable-type cell having a metal layer as an embedded member according to the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

In addition, a description to embody elements through limitation or addition may be applied to all inventions, unless particularly restricted, and does not limit a specific invention.

Also, in the description of the invention and the claims of the present application, singular forms are intended to include plural forms unless mentioned otherwise.

Also, in the description of the invention and the claims of the present application, "or" includes "and" unless mentioned otherwise. Therefore, "including A or B" means three cases, namely, the case including A, the case including B, and the case including A and B.

Hereinafter, embodiments of the present invention will be described in detail with reference to the drawings.

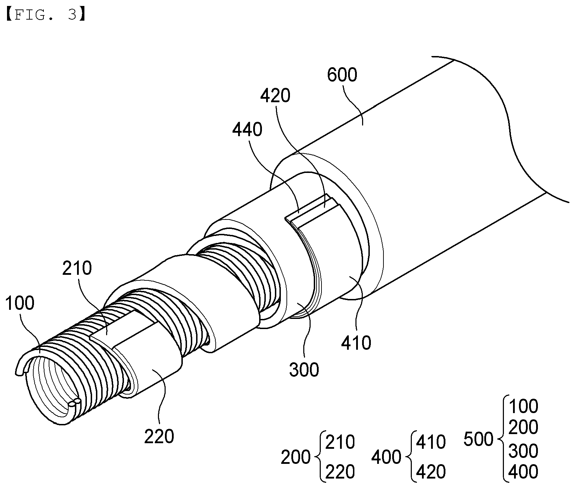

FIG. 3 is a schematic view of a cable-type cell having an embedded member that is a conductive metal sheet according to an embodiment of the present invention.

Referring to FIG. 3, the cable-type cell may include a cable-type electrode assembly 500 including an inner electrode support 100 and one or more inner electrodes 200, an outer separation layer 300, and an outer electrode 400 spirally wound around the inner electrode support 100 in sequence, and an embedded member 600 configured to receive the cable-type electrode assembly 500, wherein the embedded member 600 may be made of a conductive material.

The term "spirally" refers to a shape that is twisted over a certain range, which is similar to the shape of a common spring, and the term "helically" may be used interchangeably therewith.

Each of the inner electrode, the separation layer, and the outer electrode may have a strip structure extending in one direction.

The embedded member 600 may be made of a conductive material, and, for example, may be configured in the form of a metal sheet including aluminum, nickel, or copper, which has excellent electrical conductivity, or an alloy thereof.

The inner electrode may include a first inner electrode, and the first inner electrode may include a first inner current collector 210 and a first inner active material layer 220 formed on the first inner current collector 210.

The outer separation layer 300 may be an electrolyte layer or a separator.

The outer electrode 400 may include an outer current collector 410 and an outer active material layer 420 formed on the outer current collector 410.

A polymer layer 440 may be formed on an outer surface of the outer current collector 410 at the outer electrode 400.

The polymer layer 440 may be an adhesive layer for adhesion between the outer surface of the outer current collector 410 and the embedded member 600.

The polymer layer 440 may be made of any one selected from the group consisting of polypropylene, polycarbonate, polyethylene, styrene butadiene rubber, sodium carboxymethylcellulose, polyvinylidene fluoride, polyvinylidene fluoride copolymer, polytetrafluoroethylene, polystyrene, polyacrylonitrile, polyimide, polyacrylic acid, sodium polyacrylate, polyvinyl alcohol, sodium alginate, poly(methacrylic acid), and carboxymethyl chitosan or two or more thereof.

The polymer material of the adhesive layer is not limited as long as the adhesive layer is capable of coupling the sheathing member and the embedded member to each other.

The adhesive layer may be replaced by a pressure-sensitive adhesive.

The cable-type electrode assembly 500 may include an embedded member 600 added to the outer current collector 410 in contact with the surface of the outer current collector opposite the surface of outer current collector on which the outer active material layer 420 is formed.

The inner electrode support 100 may be configured to have an open structure having a space defined therein.

The inner electrode support 100 may be configured in the form of at least one spirally wound wire, at least one spirally wound sheet, a twisted wire, a linear wire, a hollow fiber, or a meshed support.

The hollow fiber may be made of at least one selected from the group consisting of polyethylene, polypropylene, polytetrafluoroethylene, polyvinylidene fluoride, polyacrylonitrile, polyimide, polyethylene terephthalate, polyamide imide, polyester imide, polyether sulfone, and polysulfone.

The inner electrode support 100 may include two or more wire type inner electrode supports spirally wound so as to intersect each other.

An inner electrode current collector core portion, a lithium ion supply core portion including an electrolyte, or a filling core portion may be formed in the space defined in the inner electrode support 100.

The inner electrode current collector core portion may be made of carbon nanotube, stainless steel, aluminum, nickel, titanium, sintered carbon, or copper; stainless steel surface-treated with carbon, nickel, titanium, or silver; an aluminum-cadmium alloy; a non-conductive polymer surface-treated with a conductive agent; or a conductive polymer.

The lithium ion supply core portion may include a gelled polymer electrolyte and a support.

The electrolyte may be a non-aqueous electrolyte using ethylene carbonate (EC), propylene carbonate (PC), butylene carbonate (BC), vinylene carbonate (VC), diethyl carbonate (DEC), dimethyl carbonate (DMC), ethyl methyl carbonate (EMC), methyl formate (MF), gamma-butyrolactone (γ-BL), sulfolane, methylacetate (MA), or methylpropionate (MP).

The electrolyte may include an electrolyte selected from among solid electrolytes using polyethylene oxide (PEO), polypropylene oxide (PPO), polyethylene imine (PEI), polyethylene sulfide (PES), or polyvinyl acetate (PVAc).

The electrolyte may further include a lithium salt.

The lithium salt may be any one selected from the group consisting of LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, (CF₃SO₂) ₂NLi, lithium chloroborane, low aliphatic lithium carbonate, and lithium tetraphenylborate or a mixture of two or more thereof.

Polyethylene oxide (PEO), polyvinylidene fluoride (PVdF), polyvinylidene fluoride-co-hexafluoropropylene (PVdF-HFP), polymethylmethacrylate (PMMA), polyacrylonitrile (PAN), or polyvinyl acetate (PVAc) may be used as the gelled polymer electrolyte.

The first inner electrode may include a first inner current collector 210 and a first inner active material layer 220 formed on one surface of the first inner current collector 210, and the outer electrode 400 may include an outer current collector 410 and an outer active material layer 420 formed on one surface of the outer current collector 410.

A polymer film layer formed on at least one of the other surface of the first inner current collector 210 and the other surface of the outer current collector 410 may be further included. As the result of adding the polymer film layer, the thickness of each of the first inner current collector 210 and the outer current collector 410, which are thin, may be increased to support the active material layer. In addition, since the polymer film layer, which is flexible, is added rather than increasing the thickness of each of the first inner current collector 210 and the outer current collector 410, the first inner current collector 210 and the outer current collector 410 may be easily deformed during a spiral winding process.

The polymer film layer may be made of any one selected from the group consisting of polyolefin, polyester, polyimide, and polyamide or a mixture of two or more thereof.

A polymer support layer 440 may be further formed on the surface of at least one of the first inner active material layer 220 and the outer active material layer 420.

The polymer support layer may be a porous polymer layer having a pore size of 0.01 µm to 10 µm and a porosity of 5% to 95%.

The polymer support layer may include a polar linear polymer, an oxide-based linear polymer, or a mixture thereof.

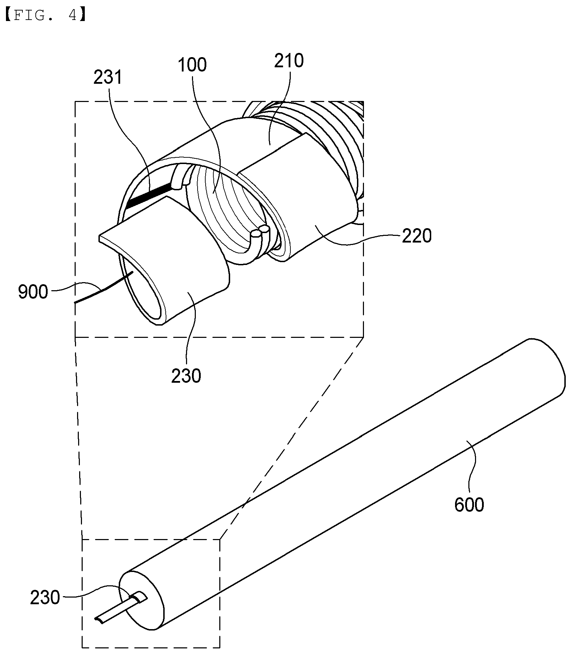

FIG. 4 is a schematic view of an electrode tab of a cable-type cell having an embedded member that is a conductive metal sheet that serves as an electrode tab of an outer electrode according to an embodiment of the present invention.

Referring to FIG. 4, the embedded member 600 may be formed as a single layer or as two or more laminated conductive layers. For example, the embedded member may be constituted by a conductive layer having a single-layer structure made of a conductive material, or may be constituted by two or more laminated layers, each of which is made of a conductive material.

The embedded member 600 may be in contact with the outer electrode 400.

The embedded member 600 may serve as an electrode tab of the outer electrode 400.

In FIG. 4, an inner electrode tab weld 231 for connection with the inner electrode tab 230 of the inner electrode 200 is formed, and a terminal connection wire 900 is coupled to the inner electrode tab 230.

The embedded member 600 constituted by the conductive layer may serve as a conventional outer electrode tab 430.

That is, as the result of forming the embedded member 600 performing the function of the outer electrode tap 430 of the outer electrode 400, electrode terminal connection is possible at the outer surface of the cable-type cell in the longitudinal direction and at both ends of the cable-type cell.

The inner electrode 200, which is an electrode opposite the outer electrode 400, is connected to the inner electrode tab 230 extending from the inner electrode current collector 210 via the inner electrode tab weld 231.

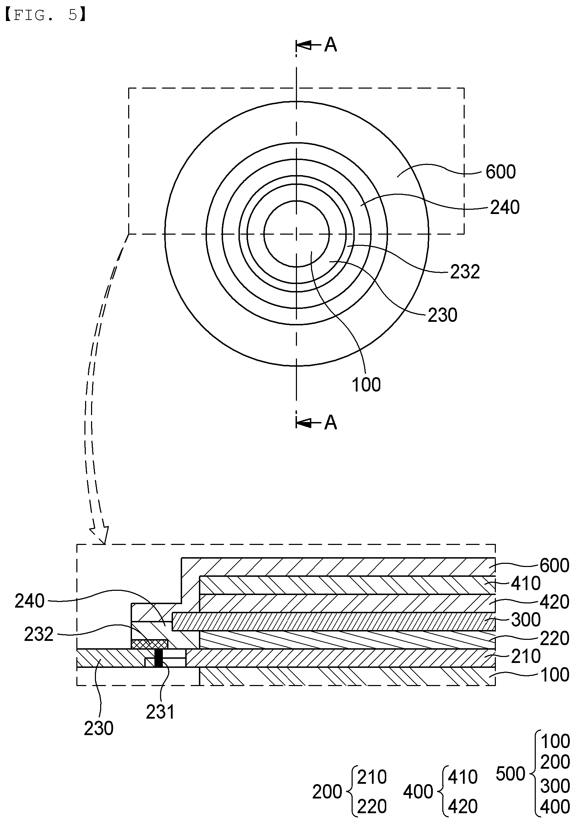

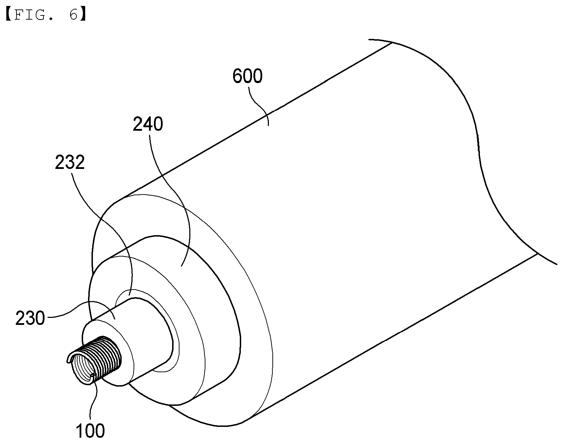

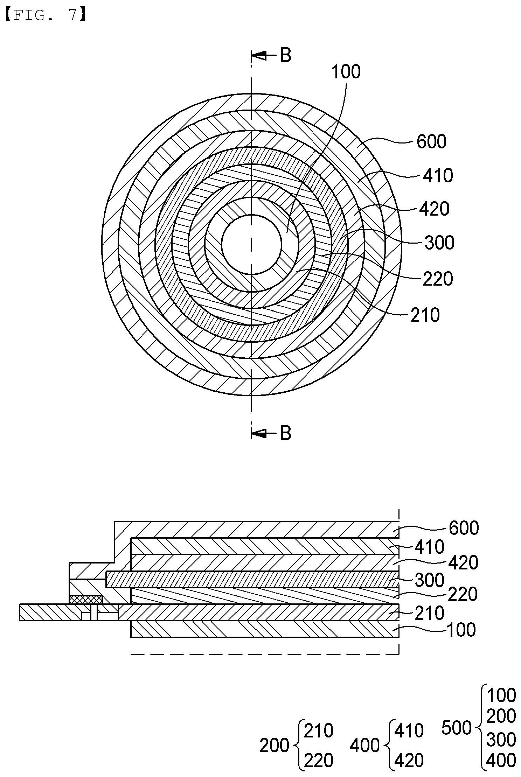

FIG. 5 is an end sectional view of a cable-type monocell having an embedded member that is a conductive metal sheet according to an embodiment of the present invention, FIG. 6 is an end perspective view of the cable-type monocell having the embedded member that is the conductive metal sheet according to the embodiment of the present invention, and FIG. 7 is a B-B sectional view of the cable-type monocell having the embedded member that is the conductive metal sheet according to the embodiment of the present invention.

Referring to FIGs. 5 to 7, when the embedded member 600, which performs the function of the outer electrode tab of the outer electrode 400 and which is made of a conductive sheet, comes into contact with the inner electrode tab 230 of the inner electrode 200 at both ends of the cable-type cell, short circuit may occur. In order to prevent this, an inner electrode sealant layer 240 is formed.

The inner electrode 200 includes a first inner electrode, wherein the first inner electrode includes a first inner current collector 210 and a first inner active material layer 220 formed on one surface of the first inner current collector 210, and the first inner electrode, the outer separation layer 300, and the outer electrode 400 may constitute a monocell.

The outer electrode 400 may include an outer current collector 410 and an outer active material layer 420 formed on one surface of the outer current collector 410, and the first inner electrode, the outer separation layer 300, and the outer electrode 400 may constitute a monocell.

Referring to a sectional view of one end of the monocell type cable-type cell of FIG. 5, the inner electrode support 100 is located in the center thereof, and the first inner current collector 210, the first inner active material layer 220, the outer separation layer 300, the outer active material layer 420, the outer current collector 410, and the conductive embedded member 600, which is formed in contact with the outer current collector 410, are sequentially added to the inner electrode support 100 in an outward direction.

When viewing the end section of the monocell, the conductive embedded member 600 may be formed while wrapping around the outer current collector 410, the outer active material layer 420, and a part of the outer separation layer 300 of a predetermined thickness.

In order to prevent short circuit due to contact between the embedded member 600 and the inner electrode 200, the inner electrode sealant layer 240 may be formed from the part of the end of the outer separation layer 300 to which the embedded member 600 is not added to the first inner active material layer 220.

The inner electrode tab 230 may be coupled to the first inner current collector 210 by welding, and an inner electrode tab weld 231 configured to connect the end of the first inner current collector 210 and the inner electrode tab 230 to each other may be formed.

An inner electrode tab sealant layer 232 may be formed to non-conductively seal the inner electrode tab weld 231.

In addition, a sealant layer for insulation may further be formed on the end of the inner support 600.

Referring to FIG. 5, it can be seen that the conductive embedded member 600 is added while wrapping around the outer current collector 410, the outer active material layer 420, and the part of the outer separation layer 300 of the predetermined thickness.

Referring to a circular sectional view perpendicular to the longitudinal direction of the cable-type cell shown in the upper part of FIG. 5, the embedded member 600, which is located at the outermost side while being added so as to wrap around the outer current collector 410, the outer active material layer 420, and the part of the outer separation layer 300 of the predetermined thickness, is shown as having the largest diameter.

The embedded member 600 extends to a part of the inner electrode tab 230, and given the thickness of the embedded member, the embedded member 600 is between a first circle and a second circle on the outside and between the second circle and a third circle on the outside in the circular sectional view.

The member located inside the embedded member 600 and between the third circle and a fourth circle on the outer side is the inner electrode sealant layer 240. The inner electrode sealant layer 240 is added from the part of the end of the outer separation layer 300 to which the embedded member 600 is not added to the first inner active material layer 220.

Inside the inner electrode sealant layer 240, a circular shape of the inner electrode tab weld sealant layer 232 configured to non-conductively seal the inner electrode tab weld 231 can be seen.

Inside the circular shape of the inner electrode tab weld sealant layer 232, a circular shape of the inner electrode tab 230 coupled to the first inner current collector 210 by welding can be seen.

Finally, the innermost circle indicates the inner electrode support 100.

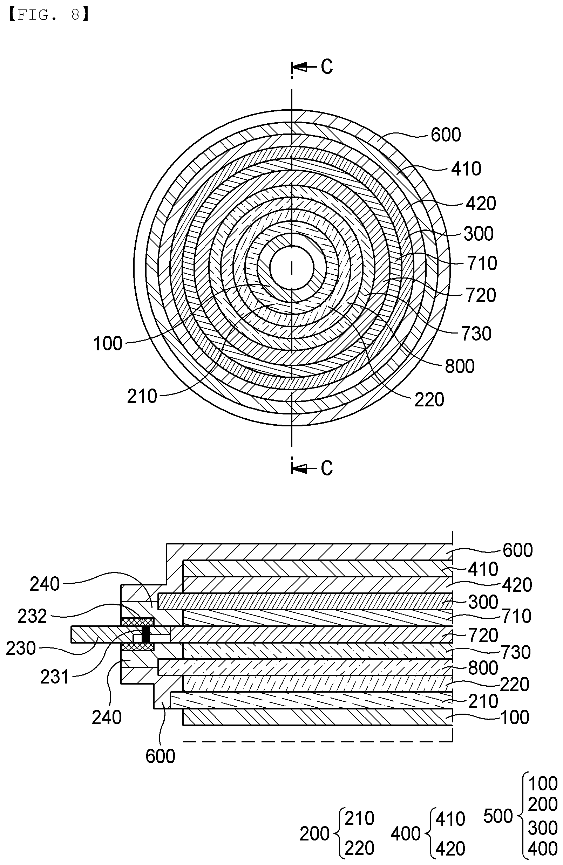

FIG. 8 is a C-C sectional view of a cable-type bi-cell having an embedded member that is a conductive metal sheet according to an embodiment of the present invention.

Referring to FIG. 8, the cable-type cell includes a first inner electrode, an inner separation layer 800 spirally wound outside the first inner electrode, and a second inner electrode 700 spirally wound outside the inner separation layer 800.

The cable-type cell shown in FIG. 8 is configured in the form of a bi-cell including the first inner electrode, the inner separation layer 800, the second inner electrode 700, an outer separation layer 300, and an outer electrode 400.

Specifically, the cable-type cell shown in FIG. 8 may include an inner electrode support 100, a strip-shaped first inner electrode 200 spirally wound outside the inner electrode support 100, a strip-shaped inner separation layer 800 spirally wound outside the first inner electrode 200, a strip-shaped second inner electrode 700 spirally wound outside the inner separation layer 800, an outer separation layer 300 spirally wound outside the second inner electrode 700, an outer electrode 400 spirally wound outside the outer separation layer 300, and an embedded member 600 formed outside the outer electrode 400.

The second inner electrode 700 may include a second inner current collector 720 and a 2-1 inner active material layer 710 and a 2-2 inner active material layer 730 formed respectively on both surfaces of the second inner current collector 720.

The first inner electrode and the outer electrode may be the same electrodes, and the second inner electrode may be a different electrode from the first inner electrode and the outer electrode.

If the first inner electrode and the outer electrode are positive electrodes, the second inner electrode may be a negative electrode, and if the first inner electrode and the outer electrode are negative electrodes, the second inner electrode may be a positive electrode.

Each of the inner separation layer 800 and the outer separation layer 300 may be an electrolyte layer or a separator.

The embedded member 600 may be formed so as to wrap around both end surfaces of the cable-type cell.

If the cable-type cell is in the form of the monocell, the embedded member 600 may be added so as to wrap around a part of the outer separation layer 300 and the outer electrode 400 exposed from both ends of the cable-type electrode assembly.

If the cable-type cell is in the form of the monocell, a non-conductive inner electrode sealant layer 240 may be formed from the part of the outer separation layer 300 to which the embedded member 600 is not added to a first inner active material layer 220.

On at least one of both ends of the cable-type electrode assembly, an inner electrode tab 230 may be formed in the part of the first inner current collector where the embedded member and the sealant layer are not formed.

An inner electrode tab sealant layer 232 may be formed at the connection between the inner electrode tab 230 and a first inner current collector 210.

If the cable-type cell is in the form of the bi-cell, the embedded member 600 may be added so as to wrap around the outer electrode 400, the inner electrode 200, a part of the outer separation layer 300, and a part of the inner separation layer 800 exposed from both ends of the cable-type electrode assembly.

If the cable-type cell is in the form of the bi-cell, the non-conductive inner electrode sealant layer 240 may be formed from the part of the outer separation layer 300 to which the embedded member 600 is not added to the 2-1 inner active material layer 710, and the non-conductive inner electrode sealant layer 240 may be formed from the part of the inner separation layer 800 to which the embedded member 600 is not added to the 2-2 inner active material layer 730.

On at least one of both ends of the cable-type electrode assembly, the inner electrode tab 230 may extend to the part of the second inner current collector 720 where the embedded member 600 and the inner electrode sealant layer 240 are not formed.

The inner electrode sealant layer 240 may include any one selected from the group consisting of polypropylene, a polypropylene-acrylic acid copolymer, a polyethylene-acrylic acid copolymer, polypropylene chloride, a polypropylene-butylene-ethylene terpolymer, polyethylene, polyethylene, and an ethylene-propylene copolymer or two or more thereof.

The sectional shape of the cable-type cell may be any one of a circular shape, an oval shape, a triangular shape, a quadrangular shape, a square shape, a rectangular shape, a polygonal shape, and an amorphous shape.

The embedded member may be encapsulated to receive the cable-type electrode assembly.

The sheathing member may be in the form of wrapping around the embedded member formed at both end surfaces of the cable-type cell while exposing only a part of the embedded member.

The sheathing member may be in the form of wrapping around both ends of the cable-type cell except for the inner electrode tab.

The first inner current collector and the second inner current collector must be isolated from each other by the inner separation layer, and the second inner current collector and the outer current collector must be isolated from each other by the outer separation layer, and therefore the width of each of the inner separation layer and outer separation layer, each of which is configured in the form of a strip, may be greater than the width of each of the first inner current collector, the second inner current collector, and the outer current collector, and the length of each of the inner separation layer and outer separation layer may be greater than the length of each of the first inner current collector, the second inner current collector, and the outer current collector.

At least one of the first inner current collector, the second inner current collector, and the outer current collector may further include a primer coating layer including a conductive agent and a binder.

The conductive agent may include any one selected from the group consisting of carbon black, acetylene black, Ketjen black, carbon fiber, carbon nanotube, and graphene or a mixture of two or more thereof.

The binder may be any one selected from the group consisting of polyvinylidene fluoride (PVDF), polyvinylidene fluoride-co-hexafluoro propylene, polyvinylidene fluoride-co-trichloroethylene, poly(butyl acrylate), polymethylmethacrylate, polyacrylonitrile, polyvinylpyrrolidone, polyvinylacetate, ethylene-co-vinyl acetate, polyethylene oxide, polyarylate, and cellulose acetate, cellulose acetate butyrate, cellulose acetate propionate, cyanoethyl pullulan, cyanoethyl polyvinylalcohol, cyanoethyl cellulose, cyanoethyl sucrose, pullulan, carboxyl methyl cellulose, styrene-butadiene rubber, acrylonitrile-styrene-butadiene copolymer, and polyimide or two or more thereof.

At least one of the first inner current collector, the second inner current collector, and the outer current collector may be made of stainless steel; aluminum; nickel; titanium; sintered carbon; copper; stainless steel surface-treated with carbon, nickel, titanium, or silver; an aluminum-cadmium alloy; a non-conductive polymer surface-treated with a conductive agent; a conductive polymer; paste including powder such as Ni, Al, Au, Ag, Pd-Ag, Cr, Ta, Cu, Ba or indium tin oxide (ITO); or carbon paste including carbon powder such as graphite, carbon black, or carbon nanotube.

The conductive polymer may be any one selected from the group consisting of polyacetylene, polyaniline, polypyrrole, polythiophene, and polymeric sulfur nitride or a mixture of two or more thereof.

When each of the first inner electrode and the outer electrode is a negative electrode and the second inner electrode is a positive electrode, each of the first inner active material and the outer active material may include any one active material particle selected from the group consisting of natural graphite, artificial graphite, or a carbonaceous material; a lithium-containing titanium composite oxide (LTO); a metal (Me), such as Si, Sn, Li, Zn, Mg, Cd, Ce, Ni, or Fe; an alloy including the metal (Me); an oxide of the metal (Me) (MeOx); and a complex of the metal (Me) and carbon or a mixture of two or more thereof. When the second inner electrode is a positive electrode, the same may be applied as when each of the first inner electrode and the outer electrode is a positive electrode as described below.

When each of the first inner electrode and the outer electrode is a positive electrode and the second inner electrode is a negative electrode, each of the first inner active material and the outer active material may include any one active material particle selected from the group consisting of LiCoO₂, LiNiO₂, LiMn₂O₄, LiCoPO₄, LiFePO₄, and LiNi_{1-x-y-z}CoₓM1_{y}M2_{z}O₂ (each of M1 and M2 is any one selected from the group consisting of Al, Ni, Co, Fe, Mn, V, Cr, Ti, W, Ta, Mg, and Mo, and x, y, and z are atomic fractions of oxide composition elements which are independent of each other, wherein 0≤x<0.5, 0≤y<0.5, 0≤z<0.5, and 0<x+y+z≤ 1) or a mixture of two or more thereof. When the second inner electrode is a negative electrode, the same may be applied as when each of the first inner electrode and the outer electrode is a negative electrode as described above.

Each of the inner separation layer and the outer separation layer may be an electrolyte layer or a separator.

The separator may have a porous polymer substrate made of a polyolefin-based polymer selected from the group consisting of an ethylene homopolymer, a propylene homopolymer, an ethylene-butene copolymer, an ethylene-hexene copolymer, and an ethylene-methacrylate copolymer; a porous polymer substrate made of a polymer selected from the group consisting of polyester, polyacetal, polyamide, polycarbonate, polyimide, polyetheretherketone, polyethersulfone, polyphenylene oxide, polyphenylene sulfide, and polyethylene naphthalate; a porous substrate made of a mixture of inorganic particles and a binder polymer; or a porous coating layer made of a mixture of inorganic particles and a binder polymer and formed on at least one surface of the porous polymer substrate.

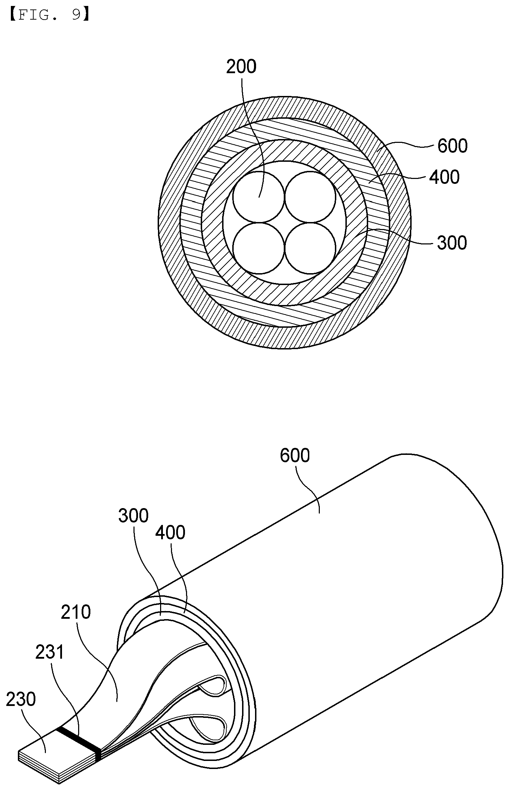

FIG. 9 is a schematic view of a cable-type cell including a plurality of inner electrodes having an embedded member that is a conductive metal sheet that serves as an electrode tab of an outer electrode according to an embodiment of the present invention.

Referring to FIG. 9, the cable-type cell may include a cable-type electrode assembly including two or more inner electrodes 200 and an outer separation layer 300 and an outer electrode 400 formed so as to surround outer surfaces of the inner electrodes 200 and spirally wound in sequence and an embedded member 600 configured to receive the cable-type electrode assembly, wherein the embedded member 600 may be made of a conductive material.

The inner electrodes 200 may be configured such that two or more wire-shaped inner electrodes are disposed in parallel in contact with each other or two or more wire-shaped inner electrodes are disposed in a twisted state.

While the twisted state is not particularly restricted, a plurality of strands of electrodes may be twisted in a state of being disposed side by side in parallel, or a plurality of strands of electrodes may be disposed one on top of the other and twisted as if braiding long hair.

If a plurality of inner electrodes 200 is provided, the inner electrodes may be densely packed together, whereby the diameter of the cable-type cell according to the present invention may be decreased. Such a cable-type cell may be made thinner than a conventional cable-type cell, allowing cable-type cells to be connected long in series, or a plurality of cells may be connected horizontally to form a sheet type structure for use in smart fabric or wearable applications.

By having the inner electrodes densely packed with each other as described above, the inner diameter of the cable-type cell according to the present invention may be decreased.

However, if the inner electrodes have hollows, the inner electrodes may be filled with an electrolyte through a needle, but if the inner electrodes are densely packed without hollows as described above, it is not easy to fill the inner electrodes with the electrolyte using a needle as described above. In the present invention, therefore, a method of filling the inner electrodes with the electrolyte when the inner electrodes have no hollows, especially when non-hollow inner electrodes are densely packed with each other, has been studied. To this end, the inventors of the present application have invented a method of allowing the electrode assembly to pass through an electrolyte bath such that an electrolyte is absorbed into the cell, and after impregnation using the electrolyte bath, performing polymer coating to prevent the electrolyte from escaping to the outside to encapsulate the electrode assembly.

A polymer electrolyte layer used for encapsulation has ionic conductivity such that the electrolyte is absorbed like a polymer electrolyte.

The cable-type secondary battery produced by this method is a cable-type secondary battery having non-hollow, densely packed inner electrodes, which facilitates the injection of electrolyte.

### (Comparative Example 1)

A cable-type cell (pristine cable-type cell) was manufactured by using, as an embedded member configured to wrap around an outer surface of a cable-type electrode assembly, a laminate sheet having a multilayer structure as a battery case of a conventional pouch battery cell. The resistance between an outer electrode and an outer electrode tab of the cable-type cell was measured. In the experiment, the outer electrode was configured as a positive electrode.

### (Example 1)

A cable-type cell (tabless cable-type cell) was manufactured by adding an embedded member having a conductive metal single-layer structure so as to wrap around an outer surface of a cable-type electrode assembly in accordance with the present invention. The resistance between an outer electrode and an outer electrode tab of the cable-type cell was measured. In the experiment, the outer electrode was configured as a positive electrode. In Example 1, the embedded member having the metal single-layer structure performs the function of the outer electrode tab.

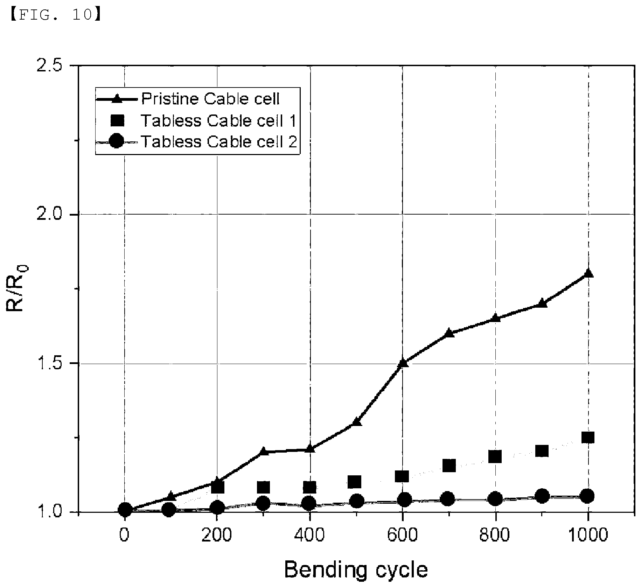

FIG. 10 is a graph showing the resistance between an outer electrode and an outer electrode tab based on the length in a conventional cable-type cell and a cable-type cell having a metal layer as an embedded member according to the present invention.

In the graph of FIG. 10, the conventional cable-type cell is denoted by "pristine cable-type cell," and the cable-type cell having the metal layer as the embedded member according to the present invention is denoted by "tabless cable-type cell."

Referring to FIG. 10, it can be seen that, in the case of the cable-type cell including the embedded member having the multilayered structure of Comparative Example 1 (pristine cable-type cell), the resistance between the positive electrode and the positive electrode tab increases sharply at 300 mm as the length of the cable-type cell increases.

It can be seen that, in the case of the cable-type cell including the embedded member having the single metal layer structure of Example 1 according to the present invention (tabless cable-type cell), the resistance between the positive electrode and the positive electrode tab is measured to be 12.5 mOhm or less, even for a length of the cable-type cell of 500 mm, as the length of the cable-type cell increases.

Those skilled in the art to which the present invention pertains will appreciate that various applications and modifications are possible within the category of the present invention based on the above description.

### (Description of Reference Numerals)

100: Inner electrode support
200: Inner electrode
210: First inner current collector
220: First inner active material layer
230: Inner electrode tab
231: Inner electrode tab weld
232: Inner electrode tab sealant layer
240: Inner electrode sealant layer
300: Outer separation layer
400: Outer electrode
410: Outer current collector e
420: Outer active material layer
430: Outer electrode tab
440: Polymer support layer
500: Cable-type electrode assembly
600: Embedded member
610: First embedded member layer
620: Second embedded member layer
630: Third embedded member layer
640: Fourth embedded member layer
700: Second inner electrode
710: 2-1 inner active material layer
720: 2nd inner current collector
730: 2-2 inner active material layer
800: Inner separation layer
900: Terminal connection wire

## Claims

1. A cable-type cell comprising:
a cable-type electrode assembly comprising an inner electrode support and one or more inner electrodes, an outer separation layer, and an outer electrode spirally wound around the inner electrode support in sequence; and
an embedded member configured to receive the cable-type electrode assembly,
wherein the embedded member is made of a conductive material.

2. The cable-type cell according to claim 1, wherein the embedded member is formed as a single layer or as two or more laminated conductive layers.

3. The cable-type cell according to claim 1, wherein the embedded member is in contact with the outer electrode.

4. The cable-type cell according to claim 1, wherein the embedded member is configured to be an electrode tab of the outer electrode.

5. The cable-type cell according to claim 1, wherein:
the one or more inner electrodes include a first inner electrode;
the first inner electrode includes a first inner current collector and a first inner active material layer formed on one surface of the first inner current collector; and
the first inner electrode, the outer separation layer, and the outer electrode constitute a monocell.

6. The cable-type cell according to claim 5, wherein:
the outer electrode includes an outer current collector and an outer active material layer formed on one surface of the outer current collector; and
the first inner electrode, the outer separation layer, and the outer electrode constitute a monocell.

7. The cable-type cell according to claim 5, wherein:
the one or more inner electrodes include an inner separation layer spirally wound outside the first inner electrode and a second inner electrode spirally wound outside the inner separation layer; and
the first inner electrode, the inner separation layer, the second inner electrode, the outer separation layer, and the outer electrode constitute a bi-cell.

8. The cable-type cell according to claim 7, wherein the second inner electrode comprises:
a second inner current collector; and
a 2-1 inner active material layer and a 2-2 inner active material layer formed respectively on opposite surfaces of the second inner current collector.

9. The cable-type cell according to claim 7, wherein:
the first inner electrode and the outer electrode are the same; and
the second inner electrode is different from the first inner electrode and the outer electrode.

10. The cable-type cell according to claim 7, wherein:
if the first inner electrode and the outer electrode are positive electrodes, the second inner electrode is a negative electrode; and
if the first inner electrode and the outer electrode are negative electrodes, the second inner electrode is a positive electrode.

11. The cable-type cell according to claim 7, wherein each of the inner separation layer and the outer separation layer is an electrolyte layer or a separator.

12. The cable-type cell according to claim 1, wherein the embedded member wraps around opposite end surfaces of the cable-type cell.

13. The cable-type cell according to claim 12, wherein, if the cable-type cell is a monocell, the embedded member is added so as to wrap around a part of the outer separation layer and the outer electrode exposed from opposite ends of the cable-type electrode assembly.

14. The cable-type cell according to claim 13, wherein, if the cable-type cell is the monocell, a non-conductive inner electrode sealant layer is formed from a part of the outer separation layer where the embedded member is not formed to the first inner active material layer.

15. The cable-type cell according to claim 14, wherein, on at least one of the opposite ends of the cable-type electrode assembly, an inner electrode tab is formed in a part of the first inner current collector where the embedded member and the sealant layer are not formed.

16. The cable-type cell according to claim 15, wherein an inner electrode tab sealant layer is formed at a connection between the inner electrode tab and the first inner current collector.

17. The cable-type cell according to claim 12, wherein, if the cable-type cell is a bi-cell, the embedded member is added so as to wrap around the outer electrode, the one or more inner electrodes, a part of the outer separation layer, and a part of the inner separation layer exposed from opposite ends of the cable-type electrode assembly.

18. The cable-type cell according to claim 17, wherein:
if the cable-type cell is the bi-cell, a non-conductive inner electrode sealant layer is formed from a part of the outer separation layer to which the embedded member is not added to the 2-1 inner active material layer; and
a non-conductive inner electrode sealant layer is formed from a part of the inner separation layer to which the embedded member is not added to the 2-2 inner active material layer.

19. The cable-type cell according to claim 18, wherein, on at least one of the opposite ends of the cable-type electrode assembly, an inner electrode tab extends to a part of the second inner current collector where the embedded member and the inner electrode sealant layer are not formed.

20. The cable-type cell according to claim 19, wherein the inner electrode sealant layer comprises any one selected from a group consisting of polypropylene, a polypropylene-acrylic acid copolymer, a polyethylene-acrylic acid copolymer, polypropylene chloride, a polypropylene-butylene-ethylene terpolymer, polyethylene, polyethylene, and an ethylene-propylene copolymer or two or more thereof.

21. The cable-type cell according to claim 1, wherein a sectional shape of the cable-type cell is any one of a circular shape, an oval shape, a triangular shape, a quadrangular shape, a square shape, a rectangular shape, a polygonal shape, and an amorphous shape.

22. The cable-type cell according to claim 1, wherein the embedded member is encapsulated to receive the cable-type electrode assembly.

23. The cable-type cell according to claim 1, wherein a sheathing member is formed on an outer surface of the embedded member, the sheathing member being configured to expose only a part of the embedded member.

24. The cable-type cell according to claim 23, wherein the sheathing member wraps around the embedded member formed at opposite ends of the cable-type cell.

25. The cable-type cell according to claim 24, wherein the sheathing member wraps around opposite ends of the cable-type cell except for the inner electrode tab.

26. A cable-type cell comprising:
a cable-type electrode assembly comprising two or more inner electrodes and an outer separation layer and an outer electrode formed so as to surround outer surfaces of the two or more inner electrodes, the outer separation layer and the outer electrode being spirally wound in sequence; and
an embedded member configured to receive the cable-type electrode assembly,
wherein the embedded member is conductive.

27. The cable-type cell according to claim 26, wherein the two or more inner electrodes are configured such that two or more wire-shaped inner electrodes are disposed in parallel in contact with each other, or such that two or more wire-shaped inner electrodes are disposed in a twisted state.
